# EUROPÄISCHE PATENTSCHRIFT

(11) **EP 3 938 228 B1**
(45) Veröffentlichungstag und Bekanntmachung des Hinweises auf die Patenterteilung: **23.09.2026**
(21) Anmeldenummer: 20727809.4
(22) Anmeldetag: 12.03.2020
(51) Int. Cl.: B60J 1/20

(54) **ANTRIEBSVORRICHTUNG FÜR DEN ANTRIEB EINER ROLLOVORRICHTUNG EINES RAHMENLOSEN FAHRZEUGFENSTERS**
DRIVE DEVICE FOR DRIVING A ROLLER BLIND DEVICE OF A FRAMELESS VEHICLE WINDOW
DISPOSITIF D'ENTRAÎNEMENT POUR L'ENTRAÎNEMENT D'UN DISPOSITIF DE STORE D'UNE FENÊTRE DE VÉHICULE SANS CADRE

(30) Priorität: 12.03.2019 DE 102019106299
(43) Veröffentlichungstag der Anmeldung: 19.01.2022
(73) Patentinhaber: HS Products Engineering GmbH, 82216 Maisach (DE)
(72) Erfinder: SPECHT, Martin, 82340 Feldafing (DE); JULLING, Ullrich, 83209 Prien (DE); DORSCHEL, Florian, 82211 Herrsching (DE)
(74) Vertreter: Wietzke, Andreas
(86) Internationale Anmeldenummer: PCT/EP2020/056714
(87) Internationale Veröffentlichungsnummer: WO 2020/182960

(56) Entgegenhaltungen:
- EP-A2- 1 972 477
- DE-U1- 202007 012 954
- DE-U1- 202007 015 541
- DE-U1- 202008 009 763

## Beschreibung

Die vorliegende Erfindung betrifft eine Antriebsvorrichtung für den Antrieb einer Rollovorrichtung eines rahmenlosen Fahrzeugfensters sowie eine Rollovorrichtung für ein rahmenloses Fenster eines Fahrzeugs mit einer solchen Antriebsvorrichtung.

Es ist bekannt, dass Fahrzeuge mit rahmenlosen Fenstern ausgestattet werden, um die Anmutung des Fahrzeugs besser zu gestalten. Dies gilt zum Beispiel bei sogenannten Coupé-Fahrzeugen bzw. sogenannten Gran-Coupé-Fahrzeugen. Bei Fahrzeugen, welche rahmenlose Fenster aufweisen, bestehen Probleme hinsichtlich der Montage von Rollos für diese Fahrzeugfenster. So wird üblicherweise bei rahmenbehafteten Türen ein Fahrzeugfensterrollo an entsprechenden Einhakelementen im Rahmen des Fahrzeugfensters befestigt. So ist es zum Beispiel denkbar, dass ein manuelles Rollo von einer Wickelwelle abgewickelt wird, um anschließend in einer Abdeckposition an entsprechenden Befestigungshaken im Rahmen des Fensters befestigt zu werden. Da bei einem rahmenlosen Fahrzeugfenster kein Rahmen existiert, kann auch kein entsprechendes Befestigungsmittel oder kein entsprechender Befestigungshaken an einem solchen Rahmen angeordnet werden. Bei bekannten Lösungen führt dies zu sehr aufwendigen Maßnahmen, um trotzdem rahmenlose Fenster mit einem Rollobehang auszustatten. Üblicherweise sind hier beidseitig Schubkabel vorgesehen, welche als Schubelemente eine Behangstange eines Rollobehangs aus einer Freigabeposition in die Abdeckposition bewegen und sie in dieser Position auch halten. Manuelle Lösungen ohne aktiven Antrieb sind bei rahmenlosen Fahrzeugfenstern bisher überhaupt nicht bekannt. Beispielsweise zeigt die DE 20 2007 015 541 U1 ein Seitenfensterrollo mit einem Seilantrieb gemäß dem Stand der Technik.

Es ist Aufgabe der vorliegenden Erfindung, die voranstehend beschriebenen Nachteile zumindest teilweise zu beheben. Insbesondere ist es Aufgabe der vorliegenden Erfindung, in kostengünstiger und einfacher Weise eine Möglichkeit zu schaffen, um bei rahmenlosen Fahrzeugfenstern einen angetriebenen Rollobehang zur Verfügung zu stellen.

Die voranstehende Aufgabe wird gelöst durch eine Antriebsvorrichtung mit den Merkmalen des Anspruchs 1 und einer Rollovorrichtung mit den Merkmalen des Anspruchs 14. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Antriebsvorrichtung beschrieben sind, selbstverständlich auch im Zusammenhang mit der erfindungsgemäßen Rollovorrichtung und jeweils umgekehrt, sodass bezüglich der Offenbarung zu den einzelnen Erfindungsaspekten stets wechselseitig Bezug genommen wird bzw. werden kann.

Erfindungsgemäß ist eine Antriebsvorrichtung für den Antrieb einer Rollovorrichtung eines rahmenlosen Fahrzeugfensters ausgestaltet. Hierfür weist eine solche Antriebsvorrichtung eine Antriebsstange mit einem oberen Rolloende für die Befestigung an einer Behangstange eines Rollobehangs der Rollovorrichtung auf. Am gegenüberliegenden Ende der Antriebsstange befindet sich ein Verkleidungsende derselben. Dabei ist die Antriebsstange zwischen einer Abdeckposition und einer Freigabeposition bewegbar gelagert. Die Antriebsvorrichtung weist weiter eine Antriebstrommel und ein wenigstens abschnittsweise flexibles Antriebsmittel auf, welches am Rolloende und/oder am Verkleidungsende der Antriebsstange befestigt ist. Dieses flexible Antriebsmittel ist wenigstens teilweise kraftübertragend um die Antriebstrommel umschlingend angeordnet, um eine Übertragung einer Antriebskraft auf die Antriebsstange zu gewährleisten. Diese Antriebskraft auf die Antriebsstange dient einer Bewegung dieser Antriebsstange zwischen der Abdeckposition und der Freigabeposition bei einer Rotation der Antriebstrommel.

Eine erfindungsgemäße Lösung versucht, die bisher bekannten Schubelemente und Schubkabel zu ersetzen. So ist erfindungsgemäß eine Kombination aus einem wenigstens abschnittsweise flexiblen Antriebsmittel und einer entsprechenden Antriebstrommel vorgesehen. Die Funktionsweise kann dabei in einfachster Weise durch eine entsprechende Befestigung am Verkleidungsende und/oder am Rolloende zur Verfügung gestellt werden. Bevorzugt ist es jedoch, wie später noch erläutert wird, wenn entweder ein separater Antrieb vorgesehen ist, ein zusätzlicher Schubmechanismus eingesetzt wird, oder aber in beide Richtungen eine Befestigung am Rolloende und am Verkleidungsende vorgesehen wird.

In einfachster Weise ist die Befestigung nur an dem Rolloende oder nur an dem unteren Verkleidungsende vorgesehen. Die Funktionsweise ist dann wie folgt. Befindet sich beispielsweise der Rollobehang in einer Freigabeposition, so befindet sich der Rollobehang zum Beispiel auf einer Wickelwelle aufgerollt. In dieser Freigabeposition ist das rahmenlose Fahrzeugfenster im Wesentlichen zur Einsichtnahme freigegeben. Um nun den Rollobehang in eine Abdeckposition zu bewegen, in welcher dieser Rollobehang das rahmenlose Fenster zumindest teilweise abdeckt, muss ein Abwickeln von einer solchen Wickelwelle erfolgen. Unabhängig von der Verwendung einer Wickelwelle sind selbstverständlich auch feststehende Rollobehänge denkbar, welche in die seitliche Verkleidung der Innentür des Fahrzeugs eingeschoben und herausgeschoben werden können.

Für die Bewegung in Richtung der Abdeckposition ist nun eine Antriebskraft notwendig, welche von der Antriebstrommel aufgebracht werden soll. Beispielsweise befindet sich das wenigstens abschnittsweise flexible Antriebsmittel, insbesondere in Form eines Seils, befestigt am unteren Verkleidungsende der Antriebsstange. In der Freigabeposition führt dies nun dazu, dass bei einer Rotation der Antriebstrommel sich dieses wenigstens abschnittsweise flexible Antriebsmittel um die Antriebstrommel aufwickelt. Durch die Verkürzung des Abstandes zwischen der Antriebsrolle und dem auf diese Weise gespannten flexiblen Antriebsmittel wird das untere Verkleidungsende der Antriebsstange angehoben. Dadurch, dass die Antriebsstange am gegenüberliegenden Rolloende fest mit der Behangstange des Rollobehangs befestigt ist, schiebt auf diese Weise die Antriebsstange den Rollobehang aus der Freigabeposition heraus in die gewünschte Abdeckposition. Diese Bewegung wird so lange durchgeführt, bis die Abdeckposition erreicht ist, zum Beispiel so lange, bis das wenigstens abschnittsweise flexible Antriebsmittel vollständig oder im Wesentlichen vollständig auf der Antriebsrolle aufgewickelt ist.

Für die Bewegung in der entgegengesetzten Richtung kann nun zum Beispiel eine andere Antriebsvorrichtung vorgesehen sein. So ist beispielsweise die später noch erläuterte angetriebene Wickelwelle denkbar, welche aktiv, motorisch, aber auch mit einem Federmotor versehen die entsprechende Rückbewegung zur Verfügung stellen kann. In gleicher Weise ist es jedoch auch denkbar, dass sich das wenigstens abschnittsweise flexible Antriebsmittel auch am Rollobehangende in einem befestigten Zustand befindet. Dies führt dazu, dass die Antriebskraft nun auch in der entgegengesetzten Richtung auf die Antriebsstange übertragen werden kann. Mit anderen Worten wird die Antriebstrommel bei einem Rollobehang in Abdeckposition nun in die entgegengesetzte Richtung rotiert. Dies führt zu einem entsprechenden Aufwickeln des wenigstens abschnittsweise flexiblen Antriebsmittels auf der Antriebstrommel von oben, sodass sozusagen die Antriebsstange aus der Abdeckposition wieder in Richtung der Freigabeposition hineingezogen wird. Die Funktionsweise ist dabei identisch mit der voranstehend beschriebenen.

Wie später noch erläutert wird, kann insbesondere in der Kombination der beiden voranstehenden Funktionsweisen, also einer Anbindung des wenigstens abschnittsweise flexiblen Antriebsmittels am Rolloende und am Verkleidungsende, eine gegenläufige Bewegung in beiden Richtungen, also ein Einbringen der Antriebskraft von der Abdeckposition in die Freigabeposition und zusätzlich von der Freigabeposition in die Abdeckposition zur Verfügung gestellt werden. Gleichzeitig ist es jedoch auch denkbar, dass nur in eine Richtung die entsprechende Antriebskraft eingebracht wird, während in der entgegengesetzten Antriebsrichtung eine zusätzliche Kraft, zum Beispiel in Form einer Federkraft zur Verfügung gestellt wird. Nicht zuletzt ist es auch denkbar, zumindest teilweise in manueller Form die entsprechende Gegenkraft zur Antriebskraft einzubringen.

Basierend auf den voranstehenden Erläuterungen wird ersichtlich, dass mit sehr einfachen und kostengünstigen Mitteln, eine Antriebstrommel, eine Antriebsstange und einem wenigstens abschnittsweise flexiblen Antriebsmittel, eine Konstruktion zur Verfügung gestellt wird, welche die Verwendung eines Rollobehangs auch bei rahmenlosen Fenstern erlaubt, und kompakt in ein Rollogehäuse integriert werden kann. Diese ist insbesondere unabhängig von entsprechenden Schubstangen, wie sie aus dem Stand der Technik bekannt sind. Ein weiterer Vorteil ist die Reduktion der Teile bei einer solchen Ausführungsform, da insbesondere eine einzige Antriebsstange, welche, wie dies später noch erläutert wird, zum Beispiel mittig angeordnet sein kann, ausreichend ist. Ein weiterer Vorteil ist es, dass bei einer erfindungsgemäßen Antriebsvorrichtung der Ort der Antriebstrommel frei oder im Wesentlichen frei gewählt werden kann. So ist insbesondere eine Anordnung im Bereich direkt unterhalb des rahmenlosen Fahrzeugfensters denkbar, sodass der größere Teil des Innenraums hinter der Verkleidung der Tür frei bleibt oder im Wesentlichen frei bleibt. Auch eine seitlich versetzte Anordnung einer solchen Antriebstrommel ist im Rahmen der vorliegenden Erfindung denkbar, sodass die Flexibilität in der Anordnung und in der Nutzung des Bauraums hinter der Verkleidung der Seitentür des Fahrzeugs vergrößert werden kann sowie eine kompakte Ausbildung möglich wird.

Die Antriebsstange kann bei einer erfindungsgemäßen Antriebsvorrichtung verschiedenste Lagerungsmöglichkeiten aufweisen. So ist beispielsweise ein einfache Gleitlagerung denkbar. Auch aufwendigere Lagerung, zum Beispiel die Verwendung einer Rollenlagerung ist möglich. Weiter kann durch die Lagerung eine Querkraft auf die Antriebsstange aufgebracht werden, welche über die Antriebsstange auf die Behangstange übertragen wird und diese gegen die Fensterscheibe des Fahrzeugfensters drückt. Dies ist insbesondere in der wenigstens einen Abdeckposition der Fall und reduziert die Klapperwahrscheinlichkeit der Behangstange gegen die Fensterscheibe. Bei der Aufbringung einer solchen Querkraft wird insbesondere eine Rollenlagerung, zum Beispiel mit zwei Rollen für die Antriebsstange eingesetzt.

Weiter von Vorteil kann es sein, wenn bei einer erfindungsgemäßen Antriebsvorrichtung ein Federantrieb vorgesehen ist für eine Übertragung einer der Antriebskraft entgegengerichteten Federkraft auf die Antriebsstange für eine Bewegung der Antriebsstange zwischen der Abdeckposition und der Freigabeposition. Wird die Antriebskraft zum Beispiel, wie dies bereits erläutert worden ist, für eine Bewegung aus der Freigabeposition in die Abdeckposition eingesetzt, so kann die Federkraft entgegengesetzt wirken und damit eine Kraft von der Abdeckposition in die Freigabeposition gewähren. Beispielsweise kann eine entsprechende Federvorrichtung oder ein Federmotor seitlich an einer Wickelwelle vorgesehen sein, um bei der Bewegung in die erste Richtung durch die Antriebskraft aufgeladen zu werden, wenn bei der entgegengesetzten Richtung die auf diese Weise aufgeladene Federkraft sich wieder entlädt und damit die gewünschte Federkraft für die Gegenbewegung zur Verfügung steht. Dabei kann eine Unterstützung durch die Federkraft genauso vorgesehen sein, wie die komplette Durchführung der entsprechenden Gegenbewegung durch eine solche Federkraft.

Vorteilhaft ist es darüber hinaus, wenn bei einer erfindungsgemäßen Antriebsvorrichtung das wenigstens abschnittsweise flexible Antriebsmittel am Rolloende und am Verkleidungsende befestigt ist. Insbesondere bei einer Ausbildung als Seil ohne jegliche Schubbelastbarkeit führt dies zu den beschriebenen Vorteilen, nämlich dass die Antriebskraft in Form einer Zugkraft in beiden Bewegungsrichtungen des Rollobehangs in denselben eingebracht werden kann. So kann die Antriebsstange aus der Freigabeposition in die Abdeckposition gezogen werden, indem die Zugkraft über die Verbindung zwischen dem Antriebsmittel und dem Verkleidungsende eingebracht wird. In der entgegengesetzten Richtung, also für die Bewegung aus der Abdeckposition in die Freigabeposition, wird ebenfalls wieder eine Zugkraft als Antriebskraft eingebracht. Diese greift nun jedoch an dem Rolloende, also am oberen Ende der Antriebsstange an, während am entgegengesetzten Ende das Seil in Form des Antriebsmittels durch das Verkleidungsende nach unten gezogen wird. Bei einer solchen Variante umschlingt also das Antriebsmittel ein- oder mehrmals die Antriebstrommel, um die Rotationskraft der Antriebstrommel und dessen Bewegung auf eine entsprechende lineare Translationsbewegung des flexiblen Antriebsmittels zu übertragen. Eine solche Möglichkeit erlaubt es, auf separate Krafteinbringungen, zum Beispiel auf den im voranstehenden Absatz erläuterten Federantrieb, zu verzichten.

Vorteilhaft ist es weiter, wenn bei einer erfindungsgemäßen Antriebsvorrichtung das wenigstens abschnittsweise flexible Antriebsmittel wenigstens abschnittsweise als Seil ausgebildet ist. Eine solche Variante ist eine besonders einfache und kostengünstige Lösung. Insbesondere ist diese Lösung kombiniert mit dem voranstehenden Absatz. Ein Seil ist insbesondere ein schubarmes bzw. ein schubloses Seil, welches ausschließlich oder im Wesentlichen ausschließlich Zugkräfte übertragen kann. Neben der einfachen und kostengünstigen Ausgestaltung ist hier eine besonders leichte und flexible Ausgestaltung möglich. Nicht zuletzt erlaubt dies insbesondere durch den Einsatz von ein oder mehreren zusätzlichen Umlenkrollen auch eine noch freiere Anordnung der Antriebstrommel hinter der Verkleidung der Innentür. Bei der Verwendung eines Seils kann auch eine vergrößerte Umschlingung von mehr als 180°, insbesondere von mehr als 360°, vorgesehen sein, um ein unerwünschtes Durchrutschen bei der Rotation der Antriebstrommel relativ zum Antriebsmittel zu vermeiden oder zumindest zu reduzieren.

Vorteilhaft ist es weiter, wenn bei einer erfindungsgemäßen Antriebsvorrichtung das wenigstens abschnittsweise flexible Antriebsmittel die Antriebstrommel wenigstens einmal, insbesondere mehr als einmal, umschlingt. Insbesondere bei der Ausgestaltung als Seil gemäß dem voranstehenden Absatz bringt dies Vorteile mit sich. So kann eine erhöhte Umschlingungszahl die Reibungskraft vergrößern, welche zur Übertragung der Rotationskraft bei der Rotation der Antriebstrommel auf das Antriebsmittel notwendig ist. Je kleiner das entsprechende Antriebsmittel ausgebildet ist, umso größer sind die Vorteile, welche mit einer Mehrfachumschlingung der Antriebstrommel erreicht werden können. Die Gefahr des Durchrutschens ist auf diese Weise deutlich reduzierbar. Die Umschlingungen können dabei geführte Umschlingungen sein. So können seitliche Umschlingungswandungen vorgesehen sein, um eine definierte Führung des Verlaufs des Antriebsmittels auf der Antriebstrommel zu gewährleisten. Insbesondere schneckenförmige Umschlingungswandungen sind hier denkbar. Weiter ist auch eine Verdickung, zum Beispiel in Form einer Verkrimpung, in einem solchen Seil denkbar, um mit einer entsprechenden Gegenkontur der Wickeltrommel zusammenzuwirken und somit ein Durchrutschen des Seils zu Verhindern oder das Risiko eines Durchrutschens zumindest zu reduzieren.

Ein weiterer Vorteil kann erzielt werden, wenn bei einer erfindungsgemäßen Antriebsvorrichtung die Antriebsstange eine Nut aufweist, in welcher das wenigstens abschnittsweise flexible Antriebsmittel zumindest teilweise läuft. Eine solche Nut kann insbesondere einem Verstecken aus optischer Sicht für das Antriebsmittel dienen. So kann diese Nut insbesondere auf der Seite der Antriebsstange angeordnet werden, welche in der Abdeckposition in Richtung des Fensters gerichtet ist. Jedoch sind grundsätzlich auch andere Nutausrichtungen oder -formen denkbar. Darüber hinaus kann die Nut zusätzlich eine Führungsfunktion gewährleisten, um das Ein- und Ausbringen des Antriebsmittels in die Nut und die Führung entlang der Antriebsstange zu unterstützen. Die Nut ist vorzugsweise über die ganze Länge oder im Wesentlichen die ganze Länge der Antriebsstange ausgebildet.

Vorteilhaft ist es weiter, wenn bei einer erfindungsgemäßen Antriebsvorrichtung das wenigstens abschnittsweise flexible Antriebsmittel wenigstens zwei separate Teilabschnitte aufweist, welche beide an der Antriebstrommel befestigt sind, wobei einer der beiden Teilabschnitte am Rolloende und der andere der beiden Teilabschnitte am Verkleidungsende befestigt ist. Somit wird eine Umwicklung für jeden der Teilabschnitte zur Verfügung gestellt, jedoch kein durchlaufendes Arbeitsmittel mehr benötigt. Vielmehr kann auf diese Weise ein unerwünschtes Durchrutschen mit maximaler Sicherheit vermieden werden, da eine feste Befestigung des jeweiligen Teilabschnitts an der Antriebstrommel zur Verfügung gestellt ist. Darüber hinaus ist die jeweilige Endposition durch die Befestigungsposition an der Antriebstrommel auch für die Antriebsstange in eindeutiger und vordefinierter Weise festgelegt.

Darüber hinaus von Vorteil ist es, wenn bei einer erfindungsgemäßen Antriebsvorrichtung die Antriebstrommel einen Antriebsmotor aufweist, insbesondere für einen elektromotorischen Antrieb der Antriebstrommel. Ein solcher Elektromotor kann zum Beispiel als Flachläufermotor ausgebildet sein. Die Anbindung kann direkt oder indirekt über ein Getriebe zur Verfügung gestellt sein. Bevorzugt ist es, wenn die Antriebstrommel direkt einen Teil einer Rotorvorrichtung eines solchen elektromotorischen Antriebs ausbildet. Damit wird eine besonders einfache und kostengünstige und vor allem kompakte Lösung für die Antriebsvorrichtung gewährleistet. Weiter ist es im Rahmen der vorliegenden Erfindung denkbar, dass der Antriebsmotor und die Antriebstrommel in einem gemeinsamen Antriebsgehäuse angeordnet sind. Ein solches Antriebsgehäuse kann zum Beispiel aus einem Kunststoffmaterial ausgebildet sein oder ein Kunststoffmaterial aufweisen.

Weitere Vorteile können erzielt werden, wenn bei einer erfindungsgemäßen Antriebsvorrichtung ein Ende des flexiblen Antriebsmittels an einer Wickelwelle der Rollovorrichtung, insbesondere an einer Aufwickelvorrichtung der Wickelwelle, befestigbar ist. Die Aufwickelvorrichtung, auch als Wickeltrommel bezeichnet, kann zum Befestigen und zum Aufwickeln des flexiblen Antriebsmittels, insbesondere eines Seils, dienen. Hierzu weist die Aufwickelvorrichtung vorzugsweise eine Befestigungsvorrichtung zum Befestigen des einen Endes des flexiblen Antriebsmittels auf. Die Aufwickelvorrichtung ist vorzugsweise an einem stirnseitigen Ende der Wickelwelle angeordnet, insbesondere an die Wickelwelle aufgesteckt bzw. in die Wickelwelle eingesteckt. Dabei sitzt die Aufwickelvorrichtung insbesondere ortsfest an der Wickelwelle. Die Wickelwelle kann zur Aufnahme der Aufwickelvorrichtung als ein hohlprofilförmiger Körper ausgebildet sein. Die Aufwickelvorrichtung kann zum Aufstecken in die Wickelwelle einen Lagerzapfen aufweisen. Dies führt dazu, dass insbesondere an der Befestigungsposition an der Wickelwelle ebenfalls eine Aufwickelvorrichtung für das Antriebsmittel zur Verfügung gestellt ist. Somit wird die gewünschte Antriebskraft durch die Rotation der Antriebstrommel zur Verfügung gestellt und gleichzeitig eine Wickelbewegung auf die Wickelwelle und somit auf die Aufwickelvorrichtung übertragen. Damit stellt sozusagen der Rollobehang, über welchen die Behangstange mit der Wickelwelle in kraftschlüssiger Verbindung steht, eine zusätzliche Möglichkeit dar, die Antriebskraft auf das Rolloende der Antriebsstange zu übertragen. Bei einer solchen Ausgestaltungsform ist vorzugsweise das Ende des flexiblen Antriebsmittels am Verkleidungsende der Antriebsstange angeordnet, sodass zum einen eine Zugkraft als Antriebskraft für die Ausschubbewegung in die Abdeckposition über das Antriebsmittel in das Verkleidungsende eingebracht werden kann. In der entgegengesetzten Richtung aus der Abdeckposition in die Freigabeposition wird die entsprechende Antriebskraft als Zugkraft über eine Rotationsbewegung in die Wickelwelle und von dieser über den Rollobehang in die Behangstange eingebracht.

Vorteilhaft ist es ebenfalls, wenn bei einer erfindungsgemäßen Antriebsvorrichtung eine Spannvorrichtung vorgesehen ist für ein Einbringen einer Spannkraft in das wenigstens abschnittsweise flexible Antriebsmittel. Insbesondere kann es sich hierbei um eine seitliche Führungsfunktion handeln, welche zum Beispiel federbelastet ausgestaltet ist. Eine Längung des Antriebsmittels während des Betriebs kann auf diese Weise ausgeglichen werden. Diese Spannvorrichtung kann sowohl passiv wirken als auch aktiv einstellbar sein und insbesondere für eine seitliche Einbringung einer Spannkraft in das flexible Antriebsmittel dienen.

Ebenfalls Vorteile bringt es mit sich, wenn bei einer erfindungsgemäßen Antriebsvorrichtung das wenigstens abschnittsweise flexible Antriebsmittel wenigstens abschnittsweise schubstabil ausgebildet ist. Eine schubstabile Ausgestaltung erlaubt die Übertragung von Druckkräften als Antriebskraft. So ist es auf diese Weise möglich, eine Anbindung des flexiblen Antriebsmittels ausschließlich am Rolloende oder ausschließlich am Verkleidungsende durchzuführen und trotzdem auf entsprechend zusätzliche Einbringungsmöglichkeiten wie die Einbringung einer Federkraft zu verzichten. Dies erlaubt es, eine ebenfalls weitere Reduktion der Anzahl der Bauteile und des benötigten Platzbedarfs mit sich zu bringen.

Es kann vorteilhaft sein, wenn bei einer erfindungsgemäßen Antriebsvorrichtung das wenigstens abschnittsweise flexible Antriebsmittel als gewölbtes Flachband ausgebildet ist. Dies ist eine Variante des voranstehend beschriebenen schubstabilen Antriebsmittels. So kann insbesondere, wie von Maßbändern bekannt, ein metallischer Werkstoff eingesetzt werden, um ein solches gewölbtes Flachband zur Verfügung zu stellen. Die Wölbung ist insbesondere in gestreckter Position vorhanden, um die entsprechenden Schubkräfte zu übertragen. Dadurch, dass es sich ansonsten jedoch um ein flexibel deformierbares Antriebsmittel handelt, ist ein Umschlingen der Antriebstrommel und sogar ein Aufwickeln des Antriebsmittels bei einer solchen Ausgestaltung möglich.

Ebenfalls Vorteile bringt es mit sich, wenn bei einer erfindungsgemäßen Antriebsvorrichtung das wenigstens abschnittsweise flexible Antriebsmittel wenigstens abschnittsweise Formschlusselemente aufweist für ein formschlüssiges Zusammenwirken mit Gegen-Formschlusselementen der Antriebstrommel. Eine solche Ausgestaltungsform erlaubt ein noch besseres Übertragen der Antriebskraft zwischen der Antriebstrommel und dem Antriebsmittel. So sind beispielsweise eine Kombination von Löchern und Zähnen genauso denkbar, wie miteinander korrespondierende Hakenelemente. Die Gefahr des Durchrutschens wird durch das gegenseitige Eingreifen der Formschlusselemente und der Gegen-Formschlusselemente im Wesentlichen vollständig vermieden.

Ein weiterer Vorteil kann erzielt werden, wenn bei einer erfindungsgemäßen Antriebsvorrichtung das wenigstens abschnittsweise flexible Antriebsmittel wenigstens abschnittsweise Kettenglieder aufweist für eine Ausbildung einer Schubkette. Auch dies erlaubt eine schubstabile Ausgestaltung des flexiblen Antriebsmittels. Auch können die einzelnen Kettenglieder in Kombination direkt die Formschlussabschnitte aufweisen, wie sie im voranstehenden Absatz beschrieben worden sind. Eine Ausgestaltung in dieser Weise erlaubt es, die Ausrichtung und vor allem die Positionierung der Antriebstrommel noch flexibler zu gestalten und insbesondere einen seitlichen Versatz derselben zu erlauben.

Ebenfalls vorteilhaft kann es sein, wenn bei einer erfindungsgemäßen Antriebsvorrichtung eine Schutzvorrichtung für einen führungslosen Schutz der Antriebsstange und/oder des Antriebsmittels vorgesehen ist. So kann ein entsprechendes Schutzgehäuse oder ein entsprechendes Schutzrohr kontaktlos oder führungslos zur Verfügung gestellt sein. Auch sind separate Schutzvorrichtungen für die Antriebsstange und das Antriebsmittel im Sinne der vorliegenden Erfindung denkbar.

Vorteilhaft ist es weiter, wenn bei einer erfindungsgemäßen Antriebsvorrichtung die Antriebsstange als zentrale, insbesondere als mittige Antriebsstange, ausgebildet ist, für eine zentrale, insbesondere mittige Bewegung des Rollobehangs. Dabei handelt es sich insbesondere um die einzige zentrale Anordnung, sodass die Gesamtkonstruktion mit weniger Bauteilen und mit weniger Platzbedarf auskommt. Auch die Stabilität in der Kraftübertragung und in der Antriebskraft wird verbessert, da die Hebelarme in beide Richtungen auf den Rollobehang gleich oder im Wesentlichen gleich ausgestaltet werden können. Ein gleichmäßiges Aus- und Einfahren zwischen Abdeckposition und Freigabeposition kann auf diese Weise gewährleistet werden. Insbesondere wird auf diese Weise eine zentrale Krafteinwirkung möglich, so dass ein Pendeln der Behangstange vermieden oder reduziert wird. Dies vermeidet insbesondere eine Pendelbewegung gegen das Fahrzeugfenster.

Weitere Vorteile sind erzielbar, wenn bei einer erfindungsgemäßen Antriebsvorrichtung für die Freigabeposition und/oder die wenigstens eine Abdeckposition zumindest ein Positionsanschlag ausgebildet ist für eine mechanische Festlegung der zugehörigen Position. Ein solcher Positionsanschlag ist insbesondere die Kombination mechanischer Positionsanschläge, welche an der Lagerung der Antriebstrommel, der Antriebsstange oder separat von diesen vorgesehen sein können. Ein unerwünschtes Überdrehen über die Freigabeposition und/oder über die Abdeckposition hinaus kann auf diese Weise wirkungsvoll vermieden werden.

Ebenfalls vorteilhaft ist es, wenn bei einer erfindungsgemäßen Antriebsvorrichtung zumindest eine Sensorvorrichtung für die Erkennung wenigstens einer Position der Antriebsstange relativ zur Rollovorrichtung vorgesehen ist. Dies erlaubt eine kontrollierte Funktion des Gesamtsystems. Auch ist ein Ausgleich von Schlupfsituationen oder ein Ausgleich einer Durchrutschsituation denkbar. Nicht zuletzt kann durch eine solche Sensorvorrichtung ein Kalibriervorgang gestartet oder durchgeführt werden.

Erfindungsgemäß weist bei der Antriebsvorrichtung das flexible Antriebsmittel zwei separate Teilabschnitte und die Antriebstrommel zwei Trommelabschnitte auf, wobei der erste Teilabschnitt des Antriebsmittels an dem ersten Trommelabschnitt und einer Wickeltrommel einer Wickelwelle befestigt ist, wobei weiter der zweite Teilabschnitt des Antriebsmittels an dem zweiten Trommelabschnitt und dem Verkleidungsende der Antriebsstange befestigt ist. Damit kann das Antriebsmittel zum Beispiel zwei Seile aufweisen. Auf diese Weise ist zum Beispiel in Pendeln der Behangstange und/oder der Antriebsstange zu vermeiden oder zumindest zu reduzieren. Das erste Seil ist dabei an dem ersten Trommelabschnitt der Antriebstrommel und damit zum Beispiel mit einem Antriebsmotor verbunden. Das andere Seilende ist an einer Wickelwelle oder einer Wickeltrommel der Wickelwelle befestigt. Das zweite Seil erstreckt sich zwischen dem zweiten Trommelabschnitt und dem Verkleidungsende. Beim Betreiben der Antriebsvorrichtung erfolgt dabei gleichzeitiges Wickeln an allen Trommeln. Wickelt sich das erste Seil auf dem ersten Trommelabschnitt auf, so wickelt es sich gleichzeitig von der Wickeltrommel ab und rotiert diese. Auch wird gleichzeitig das zweite Seil von dem zweiten Trommelabschnitt abgewickelt, so dass dieser Vorgang dem Bewegen in die Freigabeposition entspricht.

Weiter Vorteile bringt es mit sich, wenn bei einer erfindungsgemäßen Antriebsvorrichtung das Antriebsmittel, Insbesondere ein erster Teilabschnitt des Antriebsmittels und/oder ein zweiter Teilabschnitt des Antriebsmittels, mittels einer Spannvorrichtung vorgespannt ist, so dass insbesondere der Rollobehang über die Spannvorrichtung mit einer Spannkraft beaufschlagt wird. Die Vorspannung kann zum Beispiel durch seine seitliche Einwirkung erfolgen. Auch eine Einwirkung über einen Federspeicher in einem der Trommelabschnitte ist hier denkbar. Auf diese Weise kann nicht nur das Antriebsmittel, sondern über das Antriebsmittel hinaus auch der Rollobehang gespannt werden. Eine separate Spannvorrichtung für den Rollobehang ist dann nicht mehr notwendig. Auch hier ist es grundsätzlich möglich, dass die Spannvorrichtung mit der Antriebstrommel in einem gemeinsamen Antriebsgehäuse angeordnet ist. Weits die Antriebstrommel einen Antriebsmotor auf, so ist dieser vorzugsweise ebenfalls ein dem Antriebsgehäuse angeordnet. Auch ein solches Antriebsgehäuse kann aus Kunststoffmaterial ausgebildet sein oder ein Kunststoffmaterial aufweisen.

Ebenfalls Gegenstand der vorliegenden Erfindung ist eine Rollovorrichtung für ein rahmenloses Fahrzeugfenster eines Fahrzeugs. Eine solche Rollovorrichtung weist einen Rollobehang auf, welcher auf einer Wickelwelle zwischen einer Abdeckposition und einer Freigabeposition auf- und abwickelbar ist. Eine Antriebsvorrichtung ist dabei in erfindungsgemäßer Weise vorgesehen und für den Antrieb des Rollobehangs zwischen der Abdeckposition und der Freigabeposition ausgestaltet. Eine erfindungsgemäße Rollovorrichtung bringt die gleichen Vorteile mit sich, wie sie ausführlich mit Bezug auf eine erfindungsgemäße Antriebsvorrichtung erläutert worden sind.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Es zeigen schematisch:
- Figur 1: eine Ausführungsform einer Antriebsvorrichtung in Freigabeposition,
- Figur 2: die Ausführungsform der Figur 1 in Abdeckposition,
- Figur 3: eine weitere Ausführungsform einer Antriebsvorrichtung in Freigabeposition,
- Figur 4: die Ausführungsform der Figur 3 in Abdeckposition,
- Figur 5: eine Ausführungsform einer Antriebstrommel,
- Figur 6: die Ausführungsform der Figur 5 in einem anderen Antriebszustand,
- Figur 7: eine Ausführungsform einer erfindungsgemäßen Antriebsvorrichtung,
- Figur 8: eine Ausführungsform von Formschlusselementen,
- Figur 9: eine Ausführungsform eines gewölbten Antriebsmittels,
- Figur 10: eine Ausführungsform eines kettenförmigen Antriebsmittels,
- Figur 11: eine weitere Ausführungsform einer Antriebsvorrichtung, und
- Figur 12: die Antriebsvorrichtung der Figur 11 mit dem Rollobehang in Abdeckposition.

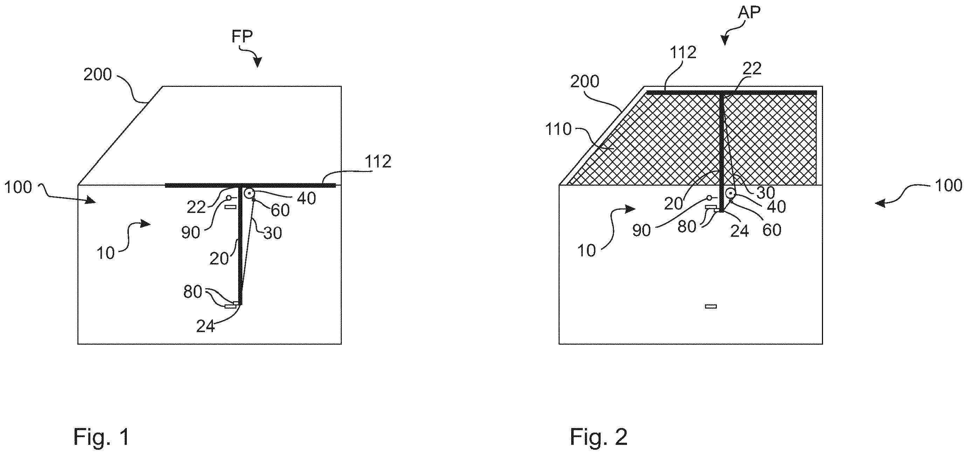

Figur 1 zeigt schematisch gemeinsam mit der Figur 2 eine erste Ausführungsform einer nicht erfindungsgemäßen Antriebvorrichtung 10. Die Figur 1 zeigt dabei die Freigabeposition FP und die Figur 2 eine Abdeckposition AP. Bei der Ausführungsform der Figur 1 ist die Rollovorrichtung 100 zur Abdeckung des Fahrzeugfensters 200 ausgebildet. Dafür ist ein Rollobehang 110 vorgesehen, welcher sich in der Abdeckposition AP gemäß der Figur 2 in einer abdeckenden Position vor dem Fahrzeugfenster 200 befindet. Für eine Bewegung zwischen der Abdeckposition AP und der Freigabeposition FP ist eine Antriebsvorrichtung 10 vorgesehen, die wie folgt funktioniert:
Im Normalzustand befindet sich der Rollobehang 110 in der Ausführung in der Freigabeposition FP gemäß Figur 1. Um ein Abdecken des Fahrzeugfensters 200 durchzuführen, wird die Antriebsvorrichtung 10 aktiviert. Hierfür wird eine Rotationsbewegung von einer Antriebstrommel 40 durchgeführt. Dadurch, dass ein flexibles Antriebsmittel 30, hier als Seil ausgebildet, zumindest teilweise umschlingend um die Antriebstrommel 40 ausgebildet ist, führt die Rotationsbewegung zu einem Aufwickeln auf der einen Seite sowie einem Abwickeln auf der anderen Seite der Antriebstrommel 40 für das Antriebsmittel 30. Dadurch wird in Form einer Zugkraft eine Antriebskraft auf die Verbindung am Verkleidungsende 24 der Antriebsstange 20 auf dieselbe übertragen und eine Bewegung aus der Freigabeposition FP gemäß der Figur 1 nach oben erzeugt. Bei dieser Bewegung verkürzt sich der Abstand und damit auch die Seillänge des Antriebsmittels 30 zwischen dem Verkleidungsende 24 und der Antriebstrommel 40 und auf der gegenüberliegenden Seite verlängert sich die Seillänge und der Abstand zwischen der Antriebstrommel 40 und dem Rolloende 22 so lange, bis die Abdeckposition AP gemäß der Figur 2 erreicht ist. Um ein Überdrehen bzw. eine erwünschte Weiterbewegung zu verhindern, sind hier Positionsanschläge 80 für beide Endpositionen gemäß der Figur 1 und der Figur 2 vorgesehen.

Für die umgekehrte Bewegung, also das Einfahren des Rollobehangs 110, wird die Antriebstrommel 40 in die entgegengesetzte Rotationsrichtung bewegt, sodass nun ein Aufwickeln bzw. Heranziehen des Antriebsmittels 30 vom Rolloende 22 her erfolgt. Eine Zugkraft kann auf das Rolloende 22 und damit auf die Antriebsstange 20 übertragen werden, sodass diese nach unten gezogen wird. Gleichzeitig schiebt die Antriebsstange 20 durch diese Bewegung nach unten das Verkleidungsende 24 und damit auch das dort befestigte andere Ende des Antriebsmittels 30 mit nach unten, so lange, bis wieder die Freigabeposition FP gemäß der Figur 1 erreicht worden ist.

Um die gesamte Bewegung, wie sie im voranstehenden Absatz erläutert worden ist, kontrollierbar zu gestalten, ist hier eine Sensorvorrichtung 90 vorgesehen. Diese kann zum Beispiel als Hallsensor ausgebildet sein, und dient dazu, eine genaue Positionsbestimmung der Antriebsstange zwischen der Abdeckposition und der Freigabeposition durchzuführen. Auf diese Weise können Unterschiede bzw. Kalibrierungsfehler erkannt und durch entsprechende Kontrollvorgänge ausgeglichen werden. Darüber hinaus ist bei der Ausführungsform der Figuren 1 und 2 eine Spannvorrichtung 60 vorgesehen, welche in der Lage ist, links und rechts und damit seitlich führend eine Spannkraft auf das Antriebsmittel 30 aufzubringen. Ein unerwünschtes Längen des Antriebsmittels 30 oder ein Ausbrechen aus der vorgegebenen Bahn kann durch eine solche Spannvorrichtung 60 vermieden oder zumindest reduziert werden.

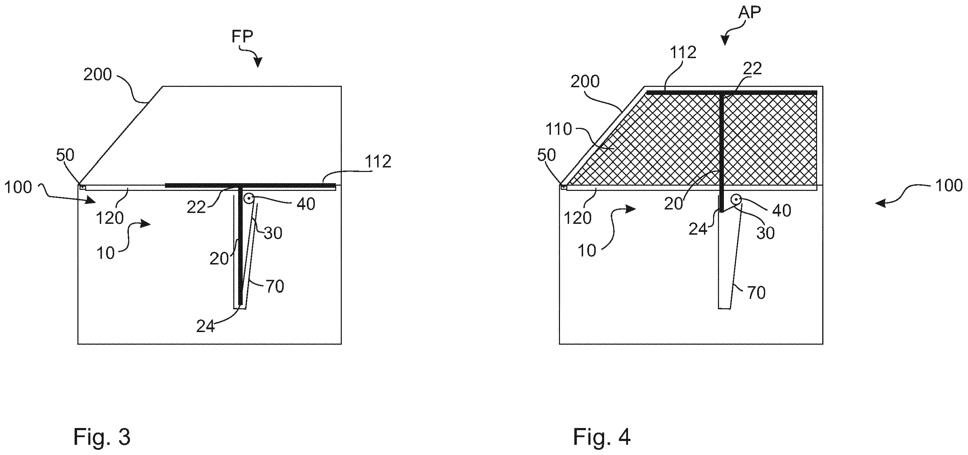

In der Figur 3 und 4 ist eine weitere Ausführungsform einer nicht erfindungsgemäßen Antriebsvorrichtung 10 dargestellt. Diese basiert auf den grundsätzlichen Überlegungen zur Figur 1. Jedoch ist hier das Antriebsmittel 30 nur am unteren Verkleidungsende 24 der Antriebsstange 20 befestigt. Für die Bewegung aus der Freigabeposition FP in die Abdeckposition AP wickelt sich das Antriebsmittel 30 bei der Rotation der Antriebstrommel 40 um dieselbe auf. Dabei wird die Zugkraft als Antriebskraft in die Antriebsstange 22 am Verkleidungsende 24 eingebracht und diese nach oben geschoben. Für die umgekehrte Bewegung kann die Antriebstrommel 40 ausschließlich das Antriebsmittel 30 freigeben. Sollte das Gewicht der Antriebsstange 20 und der Behangstange 112 nicht ausreichen, um die Rückbewegung in die Freigabeposition zu erzeugen, so kann hier zum Beispiel durch eine Federkraft von einer Federvorrichtung 50 nachgeholfen werden. Bei dieser Ausführungsform wirkt die Federvorrichtung 50 auf die Wickelwelle 120 der Rollovorrichtung 100. Selbstverständlich ist es auch möglich, dass ein Aufwickeln des Antriebsmittels 30 zusätzlich auch auf der Wickelwelle 120 erfolgt, sodass eine entsprechende Zugkraft über den Rollobehang 110 ebenfalls auf das Rolloende 22 übertragen werden kann. Bei der Ausführungsform der Figuren 3 und 4 ist darüber hinaus noch eine Schutzvorrichtung 70 vorgesehen, welche kontaktlos und führungslos einen Eingriffsschutz bzw. Klemmschutz oder Verhedderschutz für die Antriebsstange 20 und/oder das Antriebsmittel 30 zur Verfügung stellt.

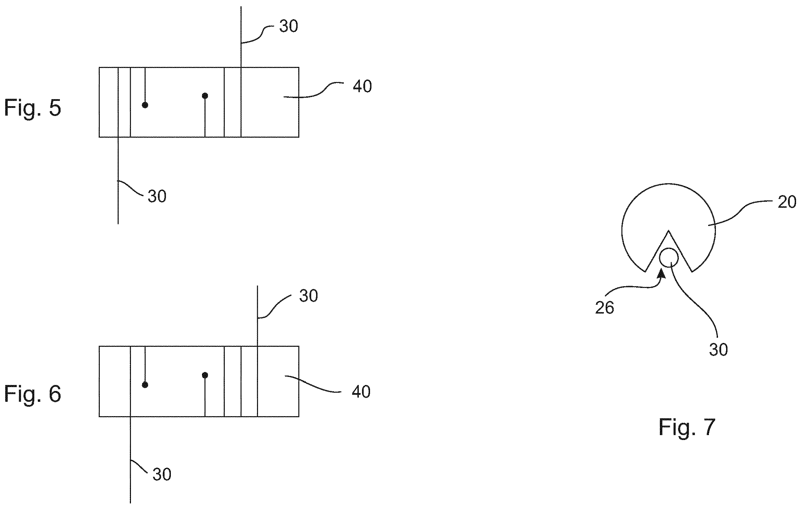

Die Figuren 5 und 6 zeigen die Möglichkeit eines erfindungsgemäß zweigeteilten Antriebsmittels 30. Hier ist ein oberer Teil des Antriebsmittels 30 am einen Ende an der Antriebstrommel 40 und am anderen Ende an dem Rolloende 22 befestigt. Der zweite Teilabschnitt ist ebenfalls an der Antriebstrommel 40 und an seinem gegenüberliegenden Ende an dem unteren Verkleidungsende 24 befestigt. Somit wird keine Umlenkung durchgeführt, sondern ein gleichzeitiges Auf- und Abwickeln, wie es die beiden Wicklungszustände der Figuren 5 und 6 zeigen. Die Funktionsweise entspricht dabei den Ausführungsformen der Figuren 1 bis 2.

Die Figur 7 zeigt eine Möglichkeit, wie das Antriebsmittel 30 versteckt geführt werden kann. Hierfür ist die Antriebsstange 20 mit einer Nut 26 ausgestaltet, in welcher zumindest abschnittsweise das Antriebsmittel 30 verläuft. Bei der Anordnung der Antriebsstange ist dabei die Nut vorzugsweise in Richtung des Fahrzeugfensters 200 gerichtet, sodass eine Einsichtnahme auf das Antriebsmittel 30 von der Innenseite des Fahrzeugs nicht oder nur erschwert möglich ist.

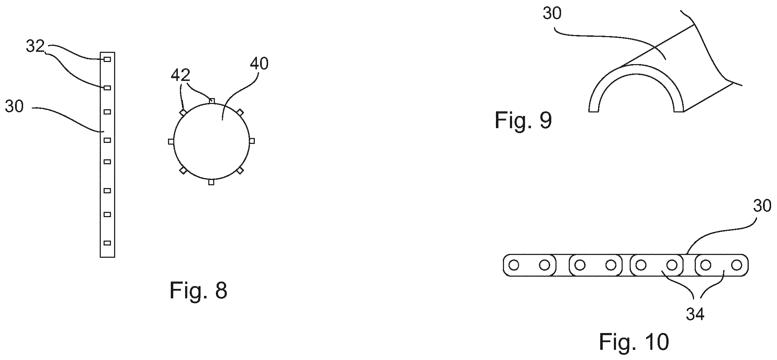

Anhand der Figur 8 ist die Möglichkeit einer formschlüssigen Kraftübertragung dargestellt. So kann die Antriebstrommel 40 hier Gegen-Formschlusselemente 42 aufweisen, welche zahnartig in entsprechende Öffnungen als Formschlusselemente 32 im Antriebsmittel 30 eingreifen. Diese Variante kann selbstverständlich mit den Ausführungsformen der Figuren 1 bis 4, aber auch der Figuren 9 und 10 kombiniert sein.

In der Figur 9 ist eine schubstabile Ausführung dargestellt, wie sie insbesondere bei einer Lösung der Figuren 3 bis 4 eingesetzt werden kann, insbesondere dann, wenn keine Federvorrichtung 50 eingesetzt werden kann oder soll. Dieses schubstabile Antriebsmittel 30 ist hier als gewölbtes Metallband ausgeführt, um die gewünschte Schubübertragung gewährleisten zu können. Ebenfalls schubübertragend und damit schubstabil ist die Ausgestaltung gemäß der Figur 10. Hier ist das Antriebsmittel 30 in Form von einzelnen Kettengliedern 34 zur Verfügung gestellt. Die einzelnen Kettenglieder 34 können dabei gleichzeitig einen formschlüssigen Eingriff zur Verfügung stellen, wie er mit Bezug auf die Figur 8 erläutert worden ist.

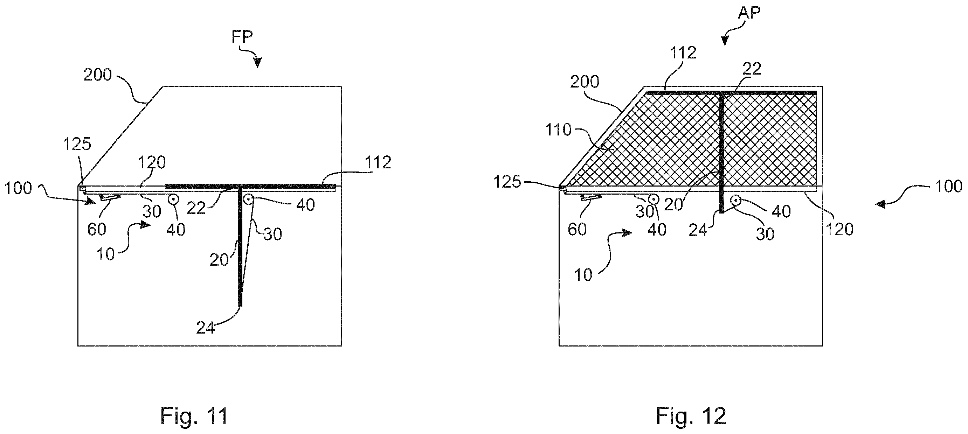

In den Figuren 11 und 12 ist eine Ausführungsform einer erfindungsgemäßen Antriebsvorrichtung zu erkennen. Hier ist die Antriebstrommel 40 in zwei Trommelabschnitte zweigeteilt. Auch das Antriebsmittel 30 ist in zwei Teilabschnitte aufgeteilt. Der linke Teilabschnitt des Antriebsmittels 30 erstreckt sich hier als Seil zwischen dem linken Trommelabschnitt der Antriebstrommel und einer Wickeltrommel, d. h. einer Aufwickelvorrichtung 125, der Wickelwelle 120. Die Aufwickelvorrichtung 125 dient zum Befestigen und zum Aufwickeln des Antriebsmittels 30, insbesondere des Seils. Hierzu kann die Aufwickelvorrichtung 125 eine Befestigungsvorrichtung zum Befestigen eines Endes des flexiblen Antriebsmittels 30 aufweisen. Die Aufwickelvorrichtung 125 kann an einem stirnseitigen Ende der Wickelwelle 120 angeordnet sein, insbesondere an die Wickelwelle 120 aufgesteckt bzw. in die Wickelwelle 120 eingesteckt sein. Die Aufwickelvorrichtung 125 ist insbesondere ortsfest an der Wickelwelle 120 befestigt. Somit kann dieser Teilabschnitt des Antriebsmittels 30 die Aufwickelvorrichtung 125 und damit die Wickelwelle 120 rotieren und damit insbesondere ein Aufwickeln des Rollobehangs 110 aus der Abdeckposition AP der Figur 12 in die Freigabeposition FP der Figur 11 durchführen oder zumindest unterstützen. Der rechte Teilabschnitt des Antriebsmittels 30 erstreckt sich zwischen dem rechten Trommelabschnitt der Antriebstrommel 40 und dem Verkleidungsende 24 der Antriebsstange 20. Dieser Teilabschnitt bringt insbesondere die Antriebkraft für die Bewegung aus der Freigabeposition FP in die Abdeckposition AP in die Antriebsstange 20 ein und führt diese Bewegung damit aus oder unterstütz sie. Auch eine Kombination der beiden Trommelabschnitte in eine gemeinsame Antriebstrommel 40 ist grundsätzlich denkbar. Weiter zeigen diese beiden Figuren 11 und 12 eine Möglichkeit einer Spannvorrichtung 60, welche hier auf das Antriebsmittel 30 wirkt. Diese eingebrachte Spannkraft wird insbesondere weitergeleitet über die Wickelwelle 120 in den Rollobehang 110, so dass nicht nur ein Spannen des Antriebsmittels 30, sondern auch des Rollobehangs 110 mit einer einzigen Spannvorrichtung 60 erfolgt. Eine separate Spannvorrichtung 60 für den Rollobehang ist dann nicht mehr notwendig, wodurch die Kompaktheit der Antriebvorrichtung 10 weiter erhöht wird.

Die voranstehende Erläuterung beschreibt die vorliegende Erfindung ausschließlich im Rahmen von Beispielen.

### Bezugszeichen

- 10: Antriebsvorrichtung
- 20: Antriebsstange
- 22: Rolloende
- 24: Verkleidungsende
- 26: Nut
- 30: Antriebsmittel
- 32: Formschlusselement
- 34: Kettenglieder
- 40: Antriebstrommel
- 42: Gegen-Formschlusselemente
- 50: Federantrieb
- 60: Spannvorrichtung
- 70: Schutzvorrichtung
- 80: Positionsanschlag
- 90: Sensorvorrichtung

- 100: Rollovorrichtung
- 110: Rollobehang
- 112: Behangstange
- 120: Wickelwelle
- 125: Wickeltrommel/Aufwickelvorrichtung

- 200: Fahrzeugfenster

- AP: Abdeckposition
- FP: Freigabeposition

## Patentansprüche

1. Antriebsvorrichtung (10) für den Antrieb einer Rollovorrichtung (100) eines rahmenlosen Fahrzeugfensters (200), aufweisend eine Antriebsstange (20) mit einem oberen Rolloende (22) für die Befestigung an einer Behangstange (112) eines Rollobehangs (110) der Rollovorrichtung (100) und einem unteren Verkleidungsende (24), wobei die Antriebsstange (20) zwischen einer Abdeckposition (AP) und einer Freigabeposition (FP) bewegbar gelagert ist, weiter aufweisend eine Antriebstrommel (40) und ein wenigstens abschnittsweise flexibles Antriebsmittel (30), welches am Verkleidungsende (24) der Antriebsstange (20) befestigt ist und die Antriebstrommel (40) wenigstens teilweise kraftübertragend umschlingt für eine Übertragung einer Antriebskraft auf die Antriebsstange (20) für eine Bewegung der Antriebsstange (20) zwischen der Abdeckposition (AP) und der Freigabeposition (FP) bei einer Rotation der Antriebstrommel (40), wobei das flexible Antriebsmittel (30) zwei separate Teilabschnitte und die Antriebstrommel (40) zwei Trommelabschnitte aufweist, **dadurch gekennzeichnet, dass** der erste Teilabschnitt des Antriebsmittels (30) an dem ersten Trommelabschnitt und einer Wickeltrommel einer Wickelwelle (120) befestigt ist, wobei weiter der zweite Teilabschnitt des Antriebsmittels (30) an dem zweiten Trommelabschnitt und dem Verkleidungsende (24) der Antriebsstange (20) befestigt ist

2. Antriebsvorrichtung (10) nach Anspruch 1, **dadurch gekennzeichnet, dass** ein Federantrieb (50) vorgesehen ist für eine Übertragung einer der Antriebskraft entgegengerichteten Federkraft auf die Antriebsstange (20) für eine Bewegung der Antriebsstange (20) zwischen der Abdeckposition (AP) und der Freigabeposition (FP).

3. Antriebsvorrichtung (10) nach einem der vorangegangenen Ansprüche, **dadurch gekennzeichnet, dass** das wenigstens abschnittsweise flexible Antriebsmittel (30) am Rolloende (22) und am Verkleidungsende (24) befestigt ist.

4. Antriebsvorrichtung (10) nach einem der vorangegangenen Ansprüche, **dadurch gekennzeichnet, dass** das wenigstens abschnittsweise flexible Antriebsmittel (30) wenigstens abschnittsweise als Seil ausgebildet ist
und/oder dass das wenigstens abschnittsweise flexible Antriebsmittel (30) wenigstens abschnittsweise schubstabil ausgebildet ist
und/oder dass das wenigstens abschnittsweise flexible Antriebsmittel (30) wenigstens abschnittsweise Formschlusselemente (32) aufweist für ein formschlüssiges Zusammenwirken mit Gegen-Formschlusselementen (42) der Antriebstrommel (40) und/oder dass das wenigstens abschnittsweise flexible Antriebsmittel (30) wenigstens abschnittsweise Kettenglieder (34) aufweist für eine Ausbildung einer Schubkette.

5. Antriebsvorrichtung (10) nach einem der vorangegangenen Ansprüche, **dadurch gekennzeichnet, dass** das wenigstens abschnittsweise flexible Antriebsmittel (30) die Antriebstrommel (40) wenigstens einmal, insbesondere mehr als einmal, umschlingt.

6. Antriebsvorrichtung (10) nach einem der vorangegangenen Ansprüche, **dadurch gekennzeichnet, dass** die Antriebsstange (20) eine Nut (26) aufweist, in welcher das wenigstens abschnittsweise flexible Antriebsmittel (30) zumindest teilweise verläuft.

7. Antriebsvorrichtung (10) nach einem der vorangegangenen Ansprüche, **dadurch gekennzeichnet, dass** das wenigstens abschnittsweise flexible Antriebsmittel (30) wenigstens zwei separate Teilabschnitte aufweist, welche beide an der Antriebstrommel (40) befestigt sind, wobei einer der beiden Teilabschnitte am Rolloende (22) und der andere der beiden Teilabschnitte am Verkleidungsende (24) befestigt ist.

8. Antriebsvorrichtung (10) nach einem der vorangegangenen Ansprüche, **dadurch gekennzeichnet, dass** die Antriebstrommel (40) einen Antriebsmotor aufweist, insbesondere für einen elektromotorischen Antrieb der Antriebstrommel (40).

9. Antriebsvorrichtung (10) nach einem der vorangegangenen Ansprüche, **dadurch gekennzeichnet, dass** ein Ende des flexiblen Antriebsmittels (30) an einer Aufwickelvorrichtung (125) der Wickelwelle (120) der Rollovorrichtung (100) befestigt ist.

10. Antriebsvorrichtung (10) nach einem der vorangegangenen Ansprüche, **dadurch gekennzeichnet, dass** eine Spannvorrichtung (60) vorgesehen ist für ein Einbringen einer Spannkraft in das wenigstens abschnittsweise flexible Antriebsmittel (30)
und/oder dass eine Schutzvorrichtung (70) für einen führungslosen Schutz der Antriebsstange (20) und/oder des Antriebsmittels (30) vorgesehen ist
und/oder dass die Antriebsstange (20) als zentrale, insbesondere als mittige Antriebsstange (20), ausgebildet ist für eine zentrale, insbesondere mittige Bewegung des Rollobehangs (110)
und/oder dass zumindest eine Sensorvorrichtung (90) für die Erkennung wenigstens einer Position der Antriebsstange (20) relativ zur Rollovorrichtung (100) vorgesehen ist.

11. Antriebsvorrichtung (10) nach einem der vorangegangenen Ansprüche, **dadurch gekennzeichnet, dass** das wenigstens abschnittsweise flexible Antriebsmittel (30) als gewölbtes Flachband ausgebildet ist.

12. Antriebsvorrichtung (10) nach einem der vorangegangenen Ansprüche, **dadurch gekennzeichnet, dass** für die Freigabeposition (FP) und/oder die wenigstens eine Abdeckposition (AP) zumindest ein Positionsanschlag (80) ausgebildet ist für eine mechanische Festlegung der zugehörigen Position.

13. Antriebsvorrichtung (10) nach einem der vorangegangenen Ansprüche, **dadurch gekennzeichnet, dass** das Antriebsmittel (30), insbesondere ein erster Teilabschnitt des Antriebsmittels (30) und/oder der zweite Teilabschnitt des Antriebsmittels (30), mittels einer Spannvorrichtung (60) vorgespannt ist, so dass insbesondere der Rollobehang (110) über die Spannvorrichtung (60) mit einer Spannkraft beaufschlagt wird.

14. Rollovorrichtung (100) für ein rahmenloses Fahrzeugfenster (200) eines Fahrzeugs, aufweisend einen Rollobehang (110), welcher auf einer Wickelwelle (120) zwischen einer Abdeckposition (AP) und einer Freigabeposition (FP) auf- und abwickelbar ist, wobei eine Antriebsvorrichtung (10) mit den Merkmalen eines der Ansprüche 1 bis 13 für den Antrieb des Rollobehangs (110) zwischen der Abdeckposition (AP) und der Freigabeposition (FP) vorgesehen ist.

## Claims

1. A drive device (10) for driving a roller blind device (100) of a frameless vehicle window (200), comprising a drive rod (20) having an upper blind end (22) for fastening to a blind bar (112) of a roller blind web (110) of the roller blind device (100) and a lower trim end (24), the drive rod (20) being movably mounted between a covering position (AP) and a release position (FP), further comprising a drive drum (40) and an at least sectionally flexible drive element (30) which is secured to the trim end (24) of the drive rod (20) and at least partially wraps around the drive drum (40) in a force-transmitting manner so as to transmit a driving force to the drive rod (20) for moving the drive rod (20) between the covering position (AP) and the release position (FP) upon rotation of the drive drum (40), the flexible drive element (30) having two separate partial sections and the drive drum (40) having two drum sections, wherein a first partial section of the drive element (30) is fastened to the first drum section and to a winding drum of a winding shaft (120), and wherein a second partial section of the drive element (30) is fastened to the second drum section and to the trim end (24) of the drive rod (20).

2. The drive device (10) according to claim 1, wherein a spring drive (50) is provided for transmitting a spring force, directed opposite to the driving force, to the drive rod (20) for moving the drive rod (20) between the covering position (AP) and the release position (FP).

3. The drive device (10) according to any one of the preceding claims, wherein the at least sectionally flexible drive element (30) is fastened both at the blind end (22) and at the trim end (24).

4. The drive device (10) according to any one of the preceding claims, wherein
- the at least sectionally flexible drive element (30) is at least in part formed as a cable, and/or
- the at least sectionally flexible drive element (30) is at least in part configured to be push-stable, and/or
- the at least sectionally flexible drive element (30) at least in part comprises form-fit elements (32) for form-fitting cooperation with mating form-fit elements (42) of the drive drum (40), and/or
- the at least sectionally flexible drive element (30) at least in part comprises chain links (34) that form a push chain.

5. The drive device (10) according to any one of the preceding claims, **characterized in that** the at least sectionally flexible drive element (30) wraps around the drive drum (40) at least once, in particular more than once.

6. The drive device (10) according to any one of the preceding claims, **characterized in that** the drive rod (20) has a groove (26) in which the at least sectionally flexible drive element (30) at least partially runs.

7. The drive device (10) according to any one of the preceding claims, **characterized in that** the at least sectionally flexible drive element (30) has at least two separate partial sections which are both fastened to the drive drum (40), wherein one of the two partial sections is fastened to the blind end (22) and the other of the two partial sections is fastened to the trim end (24).

8. The drive device (10) according to any one of the preceding claims, **characterized in that** the drive drum (40) comprises a drive motor, in particular for electromotively driving the drive drum (40).

9. The drive device (10) according to any one of the preceding claims, **characterized in that** one end of the flexible drive element (30) is fastened to a take-up device (125) of the winding shaft (120) of the roller blind device (100).

10. The drive device (10) according to any one of the preceding claims, **characterized in that**
a tensioning device (60) is provided for introducing a tensioning force into the at least sectionally flexible drive element (30)
and/or that a protective device (70) is provided for guideless protection of the drive rod (20) and/or of the drive element (30)
and/or that the drive rod (20) is configured as a central, in particular as a middle, drive rod (20) for a central, in particular middle, movement of the roller blind web (110)
and/or that at least one sensor device (90) is provided for detecting at least one position of the drive rod (20) relative to the roller blind device (100).

11. The drive device (10) according to any one of the preceding claims, **characterized in that** the at least sectionally flexible drive element (30) is configured as a curved flat band.

12. The drive device (10) according to any one of the preceding claims, **characterized in that** at least one position stop (80) is provided for the release position (FP) and/or the at least one covering position (AP) for mechanically fixing the respective position.

13. The drive device (10) according to any one of the preceding claims, **characterized in that** the drive element (30), in particular a first partial section of the drive element (30) and/or the second partial section of the drive element (30), is pretensioned by means of a tensioning device (60) such that, in particular, the roller blind web (110) is subjected to a tensioning force via the tensioning device (60).

14. A roller blind device (100) for a frameless vehicle window (200) of a vehicle, comprising a roller blind web (110) which can be wound up and unwound on a winding shaft (120) between a covering position (AP) and a release position (FP), wherein a drive device (10) having the features of any one of claims 1 to 13 is provided for driving the roller blind web (110) between the covering position (AP) and the release position (FP).

## Revendications

1. Dispositif d'entraînement (10) pour l'entraînement d'un dispositif de store (100) d'une fenêtre de véhicule sans cadre (200) comprenant une tige d'entraînement (20) avec une extrémité supérieure de store (22) pour la fixation à une tringle de store (112) d'une toile de store enrouleur (110) du dispositif de store (100) et une extrémité inférieure d'habillage (24), la tige d'entraînement (20) étant montée de manière à pouvoir se déplacer entre une position de recouvrement (AP) et une position de dégagement (FP), comprenant en outre un tambour d'entraînement (40) et un moyen d'entraînement au moins partiellement flexible (30), qui est fixé à l'extrémité de recouvrement (24) de la tige d'entraînement (20) et qui entoure au moins partiellement le tambour d'entraînement (40) de manière à transmettre la force, afin de transmettre une force d'entraînement à la tige d'entraînement (20) pour un déplacement de la tige d'entraînement (20) entre la position de recouvrement (AP) et la position de dégagement (FP) lors d'une rotation du tambour d'entraînement (40), le moyen d'entraînement flexible (30) comportant deux sections distinctes et le tambour d'entraînement (40) comportant deux sections de tambour, **caractérisé en ce que** la première partie du moyen d'entraînement (30) est fixée à la première partie du tambour et à un tambour d'enroulement d'un arbre d'enroulement (120), la deuxième partie du moyen d'entraînement (30) étant en outre fixée à la deuxième partie du tambour et à l'extrémité de revêtement (24) de la tige d'entraînement (20)

2. Dispositif d'entraînement (10) selon la revendication 1, **caractérisé en ce qu'** un mécanisme à ressort (50) est prévu pour une transmission à la tige d'entraînement (20) d'une force de ressort opposée à la force d'entraînement, pour un déplacement de la tige d'entraînement (20) entre la position de recouvrement (AP) et la position de dégagement (FP).

3. Dispositif d'entraînement (10) selon l'une des revendications précédentes, **caractérisé en ce que** le moyen d'entraînement au moins partiellement flexible (30) est fixé à l'extrémité du store (22) et à l'extrémité d'habillage (24).

4. Dispositif d'entraînement (10) selon l'une des revendications précédentes, **caractérisé en ce que** le moyen d'entraînement au moins partiellement flexible (30) est réalisé au moins partiellement sous la forme d'un câble et/ou **en ce que** le moyen d'entraînement, au moins partiellement flexible (30), est réalisé au moins partiellement de manière à résister à la poussée et/ou **en ce que** le moyen d'entraînement au moins partiellement flexible (30) comporte, au moins partiellement, des éléments par engagement positif (32) pour une coopération par engagement positif avec des éléments par engagement positif complémentaires (42) du tambour d'entraînement (40) et/ou **en ce que** le moyen d'entraînement (30), flexible au moins partiellement, comporte, au moins partiellement, des maillons de chaîne (34) pour la formation d'une chaîne de poussée.

5. Dispositif d'entraînement (10) selon l'une des revendications précédentes, **caractérisé en ce que** le moyen d'entraînement au moins partiellement flexible (30) s'enroule autour du tambour d'entraînement (40) au moins une fois, et notamment plusieurs fois.

6. Dispositif d'entraînement (10) selon l'une des revendications précédentes, **caractérisé en ce que** la tige d'entraînement (20) comporte une rainure (26) dans laquelle s'étend, au moins partiellement, le moyen d'entraînement (30) flexible.

7. Dispositif d'entraînement (10) selon l'une des revendications précédentes, **caractérisé en ce que** le moyen d'entraînement au moins partiellement flexible (30) comporte au moins deux sections distinctes, qui sont toutes deux fixées au tambour d'entraînement (40), l'une des deux sections étant fixée à l'extrémité du store (22) et l'autre des deux sections étant fixée à l'extrémité de recouvrement (24).

8. Dispositif d'entraînement (10) selon l'une des revendications précédentes, **caractérisé en ce que** le tambour d'entraînement (40) comporte un moteur d'entraînement, notamment un tambour d'entraînement pour un entraînement électrique du tambour d'entraînement (40).

9. Dispositif d'entraînement (10) selon l'une des revendications précédentes, **caractérisé en ce qu'**une extrémité du moyen d'entraînement flexible (30) est fixé à un dispositif d'enroulement (125)de l'arbre d'enroulement (120) du dispositif de store (100).

10. Dispositif d'entraînement (10) selon l'une des revendications précédentes, **caractérisé en ce qu'**un dispositif de tension (60) est prévu pour exercer une force de tension sur le moyen d'entraînement (30) au moins partiellement flexible et/ou **en ce qu'**un dispositif de protection (70) est prévu pour une protection sans guidage de la tige d'entraînement (20) et/ou du moyen d'entraînement (30) et/ou **en ce que** la tige d'entraînement (20) est conçue comme une tige d'entraînement centrale, en particulier médiane (20), pour un mouvement central, en particulier médian, du store enrouleur (110) et/ou **en ce qu'**au moins un dispositif de détection (90) est prévu pour détecter au moins une position de la tige d'entraînement (20) par rapport au dispositif de store (100).

11. Dispositif d'entraînement (10) selon l'une des revendications précédentes, **caractérisé en ce que** le moyen d'entraînement (30) au moins partiellement flexible est réalisé sous la forme d'un ruban plat bombé.

12. Dispositif d'entraînement (10) selon l'une des revendications précédentes, **caractérisé en ce que** pour la position de dégagement (FP) et/ou ladite au moins une position de recouvrement (AP), au moins une butée de position (80) est prévue pour le verrouillage mécanique de la position correspondante.

13. Dispositif d'entraînement (10) selon l'une des revendications précédentes, **caractérisé en ce que** le moyen d'entraînement (30), en particulier une première partie du moyen d'entraînement (30) et/ou la deuxième partie du moyen d'entraînement (30), est précontrainte au moyen d'un dispositif de serrage (60), de sorte que, en particulier la toile de store enrouleur (110) est soumise à une force de tension par l'intermédiaire du dispositif de serrage (60).

14. Dispositif de store (100) pour une fenêtre de véhicule sans cadre (200) d'un véhicule, comprenant une toile de store enrouleur (110) qui peut être enroulée et déroulée sur un arbre d'enroulement (120) entre une position de recouvrement (AP) et une position de dégagement (FP), un dispositif d'entraînement (10) présentant les caractéristiques de l'une des revendications 1 à 13 étant prévu pour l'entraînement du dispositif de store (110) entre la position de recouvrement (AP) et la position de dégagement (FP).
